# EUROPÄISCHE PATENTSCHRIFT

(11) **EP 2 418 430 B1**
(45) Veröffentlichungstag und Bekanntmachung des Hinweises auf die Patenterteilung: **14.12.2016**
(21) Anmeldenummer: 11171746.8
(22) Anmeldetag: 28.06.2011
(51) Int. Cl.: F24F 6/14, F04D 19/00, F04D 19/02

(54) **Klimatisierungseinrichtung sowie Verfahren zum Konditionieren eines Luftstroms**
Air conditioning device and method for conditioning an airflow
Dispositif de climatisation et procédé de conditionnement d'un flux d'air

(30) Priorität: 02.07.2010 DE 102010017712; 16.07.2010 DE 102010036467
(43) Veröffentlichungstag der Anmeldung: 15.02.2012
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus

(56) Entgegenhaltungen:
- DE-C2- 4 110 550
- GB-A- 2 139 751
- US-A- 2 195 781
- US-A- 2 218 468
- US-A- 2 338 382

## Beschreibung

Die Erfindung betrifft eine Klimatisierungseinrichtung zum Konditionieren eines in einem Kanal geführten Luftstroms zur Klimatisierung eines Raumes, umfassend einen Düsenstock mit einer Mehrzahl von über den Querschnitt des Kanals verteilt angeordneter mit Druckwasser beaufschlagter Düsen zur Abgabe von Wasser, insbesondere in Form eines Sprühnebels sowie einen Wärmetauscher, der zum einen vom Luftstrom durchströmbar ausgebildet ist und eine Vielzahl von Luftströmungskanälen aufweist und zum anderen Anschlüsse zum Durchleiten eines Wärme- und/oder Kältefluids durch ein oder mehrere Temperierkanäle aufweist.

Herkömmliche Klimatisierungseinrichtungen bzw. Verfahren, insbesondere zum Befeuchten eines in einem Kanal geführten Luftstroms sind hinlänglich bekannt. Es wird diesbezüglich beispielsweise auf die DE 41 10 550 C2 verwiesen. Die vorbekannten Klimatisierungseinrichtungen zeichnen sich jedoch durch relativ viele Komponenten aus, die die Herstellungs-, Montage- und Wartungskosten sowie auch die Baulänge der Anlage erhöhen. Darüber hinaus sind die bisherigen Anlagen energetisch nicht optimiert und weiterhin oftmals geräuschintensiv.

GB 2 139 751 offenbart eine Klimatisierungseinrichtung nach dem Oberbegriff des Anspruchs 1.

Die vorliegende Erfindung stellt sich die Aufgabe, eine Klimatisierungseinrichtung sowie ein entsprechendes Verfahren vorzuschlagen, durch die im Hinblick auf die vorgenannten Problempunkte erhebliche Verbesserungen erzielt werden können. Insbesondere stellt sich die vorliegende Erfindung die Aufgabe, eine Klimatisierungseinrichtung zum Konditionieren eines in einem Kanal geführten Luftstroms sowie ein entsprechendes Verfahren vorzuschlagen, die einen energetisch optimierten Betrieb bei gleichzeitiger Geräuschreduktion erlauben.

Zur Lösung dieser Aufgabe wird eine Klimatisierungseinrichtung mit den Merkmalen des Anspruches 1, sowie ein Verfahren mit den Merkmalen des Anspruches 17 vorgeschlagen.

Hinsichtlich der Klimatisierungseinrichtung gemäß Anspruch 1 sowie des Verfahrens gemäß Anspruch 17 zum Konditionieren eines in einem Kanal geführten Luftstroms besteht eine Kernüberlegung der Erfindung darin, bei der an sich energieintensiven Befeuchtung den Luststrom zunächst kaum oder gar nicht mehr vorzuerwärmen, sondern das Befeuchtungsfluid, insbesondere Wasser in den relativ kalten Luftstrom einzusprühen und eine Verdunstung bzw. Aufnahme der Feuchte in den Luftstrom durch eine freie Verdunstung des Befeuchtungsfluids im Luftstrom einerseits und eine Nachverdunstung des Befeuchtungsfluids andererseits im strömungstechnisch nachgeschalteten Wärmetauscher zu bewirken.

Die Erfindung setzt sich damit gleich über mehrere Vorurteile hinweg, nämlich dass eine effektive Einbringung von Feuchte nur in einem relativ hoch aufgeheizten bzw. warmen Luftstrom möglich ist bzw. dass ein Wärmetauscher innerhalb einer Klimatisierungseinrichtung zur Vermeidung von Keimen nicht feucht, selbst wenn dies nur zeitweise so erfolgt, betrieben werden darf.

Der Erfinder hat allerdings nach Überwindung dieser in der Fachwelt bestehenden Vorurteile überraschenderweise festgestellt, dass sich bei strömungstechnischer Nachordnung des Wärmetauschers ein hocheffizienter Feuchteeintrag mit äußerst genauer Einstellbarkeit erzielen lässt. Darüber hinaus kann der Wärmetauscher nach einem weiter bevorzugten Gedanken der vorliegenden Erfindung mehrere herkömmlich vorhandene Bauteile ganz oder teilweise ersetzen mit der Folge, dass Herstellungs-, Transport- und Montagekosten sowie die gesamte Baulänge erheblich reduziert werden können.

Nach einem konkreten, vorteilhaften Aspekt der vorliegenden Erfindung kann der Wärmetauscher zunächst integriert einen Tropfenabscheider aufweisen oder als Tropfenabscheider ausgebildet sein bzw. als Tropfenabscheider wirken. Durch eine solche Ausgestaltung wird ein separater Tropfenabscheider entbehrlich, so dass eine erhebliche Kostenreduktion sowie eine kompaktere Bauweise erzielbar sind.

Nach der vorliegenden Erfindung ist der Wärmetauscher zur Ausübung mindestens zwei der folgenden, vorzugsweise mindestens drei der folgenden, weiter vorzugsweise mindestens vier der folgenden, besonders vorzugsweise aller folgenden Funktionen:
- Nachverdunstung von im Luftstrom mitgerissener Befeuchtungspartikel (Befeuchtungsbetrieb)
- Aufheizen des Luftstroms (Heizbetrieb)
- Abkühlung des Luftstroms (Kühlbetrieb)
- Entfeuchtung des Luftstroms (Entfeuchtungsbetrieb)
- Abtrocknung befeuchteter oder nasser Flächen (Entkeimungsbetrieb) ausgebildet.

Der Wärmetauscher kann erfindungsgemäß - realisiert durch ein einziges Bauteil - eine Mehrfachfunktion übernehmen und zwar dabei je nach Ausgestaltung bis zu vier verschiedene Luftkonditionierfunktionen ermöglichen und darüber hinaus bei entsprechender Ausgestaltung noch einen Entkeimungsbetrieb dadurch erlauben, dass er insbesondere bei reduziertem, abgeschalteten oder umgepolten, d.h. entgegen der ursprünglichen Richtung gerichteten Luftstrom die befeuchteten oder nassen Flächen an seiner Oberfläche selbst sowie ggf. auch umliegender Bauteile, wie einer Bodenwanne und/oder Ablaufrinne so stark erhitzt, dass diese Flächen innerhalb kürzester Zeit trocknen und so eine Keimbildung verhindert ist bzw. etwaig vorhandene Keime auch abgetötet werden.

Hinsichtlich der Konditionierung des Luftstroms kann neben der bereits erwähnten Befeuchtung eine Aufheizung des Luftstroms - bei abgeschaltetem Druckwasser -, eine Abkühlung des Luftstroms - bei abgeschaltetem Druckwasser - oder eine Entfeuchtung des Luftstroms - bei abgeschaltetem Druckwasser - erfolgen.

Zur Abkühlung des Luftstroms bzw. zur Entfeuchtung des Luftstroms wird der Wärmetauscher mit einem Kältefluid beschickt. Zur Aufheizung des Luftstroms, zur Nachverdunstung von im Luftstrom mitgerissener Befeuchtungspartikel und zur Abtrocknung befeuchteter oder nasser Flächen (Entkeimungsbetrieb) wird der Wärmetauscher mit einem Wärmefluid beschickt. Bei dem Wärmefluid kann es sich beispielsweise um Wasser, Heißgas bzw. das in einer Wärmepumpe umlaufende Fluid handeln. Darüber hinaus ist es denkbar, unmittelbar eine Wärmepumpe anzuschließen, das heißt den Wärmetauscher mit dem Wärmefluid der Wärmepumpe zu beschicken.

Nach der Erfindung ist zur Nachverdunstung von im Luftstrom mitgerissener Befeuchtungspartikel und/oder zur Aufheizung des Luftstroms die Beschickung des Wärmetauschers mit einem Wärmefluid so getroffen, dass das Wärmefluid den Wärmetauscher in Strömungsrichtung des Luftstroms durchfließt. Dadurch ist die dem eintretenden Luftstrom zugewandte Seite des Wärmetauschers stärker erhitzt, so dass dort auftreffende Befeuchtungspartikel relativ rasch und effizient verdunstet werden.

Ferner ist dagegen bei Abkühlung des Luftstroms (Kühlbetrieb) und/oder bei Entfeuchtung des Luftstroms (Entfeuchtungsbetrieb) die Beschickung des Wärmetauschers mit Kältefluid so getroffen, dass das Kältefluid den Wärmetauscher entgegen der Strömungsrichtung des Luftstroms durchfließt.

In einer bevorzugten Ausgestaltung ist dem Wärmetauscher eingangs- oder ausgangsseitig ein Mischventil, insbesondere Drei-Wege-Ventil oder Vier-Wege-Ventil zugeordnet, um die Zuführung heißen Wärmefluids bzw. Kältefluids zur Einstellung einer gewünschten Vorlauftemperatur mit einem einstellbaren Anteil an Umlauffluid zu mischen. Der Wärmetauscher kann bei dieser Ausgestaltung wahlweise ausschließlich mit aus einer Wärmefluidquelle entnommenem heißen Fluid der Temperatur T_{H} oder ausschließlich Kältefluid aus einer Kältequelle der Temperatur T_{L} zugeführt werden. Durch Beimischung von Umlauffluid lässt sich eine gegenüber T_{H} geringere Temperatur im Vorlauf bzw. eine gegenüber T_{L} höhere Temperatur im Vorlauf mischen. Zu diesem Zweck ist das Mischventil bzw. das Drei-Wege-Ventil bzw. Vier-Wege-Ventil bevorzugtermaßen mit einem Stellantrieb ausgestattet, so dass sich durch Abgleich mit der tatsächlichen Ist-Temperatur T_{Ist} im Vorlauf, die über einen Sensor im Vorlauf ermittelt wird, das gewünschte Mischungsverhältnis am Mischventil einstellen bzw. regeln lässt.

Nach einem weiter bevorzugten Aspekt umfasst die Klimatisierungseinrichtung weiterhin eine vorzugsweise in ihrer Förderleistung einstellbare Wärmetauscherpumpe, um das Wärme- bzw. Kältefluid durch den Wärmetauscher zu pumpen. Durch das Vorsehen einer dem Wärmetauscher zugeordneten Wärmetauscherpumpe kann die Fließgeschwindigkeit des Wärme- bzw. Kältefluids genau eingestellt werden. Sofern die Wärmetauscherpumpe selbst, beispielsweise über einen Frequenzumrichter in ihrer Förderleistung einstellbar ist, lässt sich auch die Fließgeschwindigkeit des Wärme- bzw. Kältefluids variieren und bedarfsgerecht auf einen jeweils gewünschten Wert einstellen.

Gemäß einer weiteren vorteilhaften Ausführungsform kann vorgesehen sein, dass die Luftströmungskanäle thermisch leitendes Material mit einem Leitfähigkeitskoeffizienten von wenigstens 50 W/(m·K), insbesondere Kupfer und/oder Aluminium umfassen. Damit wird ein effizienter Wärmeaustausch gewährleistet. Im Falle von Kupfer hat das Metall zudem auch noch antibakterielle Wirkungen, welche vor allem einem ungewünschten Keimbefall des Wärmetauschers entgegen wirken können.

Das hier vorgeschlagene Prinzip der Befeuchtung unter Verwendung des Wärmetauschers im Wärmezufuhr-Betriebszustand ermöglicht eine effektive Auffeuchtung des Luftstroms, so dass gemäß einer Ausgestaltung der vorliegenden Erfindung vorgesehen sein kann, dass der Befeuchtungsabschnitt derart ausgebildet ist, dass der Luftstrom auf eine relative Feuchte von wenigstens 95% oder sogar von wenigstens 98% befeuchtet werden kann. Aufgrund der in diesem Fall hohen aufzuwendenden Verdampfungsenthalpie wird zudem die Umgebungstemperatur abgekühlt und damit die Temperatur des Luftstromes zu einer geringeren Temperatur konditioniert. Folglich kann bei einem Eintrag von einer hohen relativen Feuchte in den Luftstrom gleichzeitig eine Temperaturkonditionierung wie eine Feuchtekonditionierung erfolgen. Überdies erlaubt eine relative Feuchte von wenigstens 95% oder sogar von wenigstens 98% auch Räume mit Feuchtigkeit zu versorgen, in denen typischerweise eine sehr hohe Luftfeuchtigkeit aufrecht erhalten sein muss. Solche Anforderungen sind etwa aus der Lebensmittel-, Tabak- und Druckindustrie bekannt.

Gemäß einer ebenfalls vorteilhaften Ausführungsform kann vorgesehen sein, dass die Kontaktflächen der Luftströmungskanäle zum Wärmeaustausch mit dem Luftstrom ausreichend groß sind, um eine Kühlung eines Luftstroms vorbestimmter relativer Feuchte auch bei Temperaturen des Kühlfluids oberhalb des Taupunktes gewährleisten zu können. Gemäß der aus dem Stand der Technik bekannten Klimatisierungseinrichtungen weist das Kühlfluid zur Kühlung eines Wärmetauschers eine Temperatur auf, welche deutlich unterhalb des Taupunktes oder des Taupunktbereiches des zu kühlenden Luftstromes liegt, typischerweise zwischen 6°C und 12°C. Der Grund für die geringen Temperaturen im Betrieb ist zunächst darin zu sehen, dass eine Kühlung des Luftstromes mit einer zunehmenden Differenz zwischen der Temperatur des Luftstroms und der des Kühlfluids zunehmend effizienter erfolgen kann, d.h. die abgegebene Kühlleistung pro Fläche eines Luftströmungskanals gesteigert werden kann, wenn die Differenz vergrößert wird. Durch einen Kühlvorgang bei Temperaturen unterhalb des Taupunktes oder des Taupunktbereiches des zu kühlenden Luftstromes kann es jedoch wenigstens lokal zur Kondensation des in dem Luftstrom befindlichen Wasserdampfes kommen, welche den Energiebetrag der Verdampfungsenthalpie freisetzt. Dieser Energiebetrag erfordert damit jedoch eine erhöhte Kühlleistung, welche ausschließlich dazu dient, den Phasenübergang des Wassers aus der Dampfphase in die flüssige Phase herbeizuführen. Eine Temperaturänderung erfolgt während dieses Phasenübergangs nicht.

Ausführungsgemäß sind nun die Kontaktflächen der Luftströmungskanäle zum Wärmeaustausch mit dem Luftstrom ausreichend groß, um auch eine genügende Kühlung oberhalb des Taupunktes bzw. des Taubereiches gewährleisten zu können, da dem Luftstrom bei seinem Weg durch die Luftströmungskanäle genügend Energie entzogen werden kann, wobei es nicht zu einer Kondensation des Wasserdampfes in dem Luftstrom kommt. Damit braucht die Verdampfungsenthalpie energetisch nicht aufgewendet zu werden, wodurch eine effizientere Gesamtkühlung des Luftstroms resultiert. Zudem fallen geringere Kosten für die Kühlung an. Weiterhin weist die gekühlte Luft eine unveränderte absolute Feuchte auf, so dass auch auf eine nachgeschaltete, erneute Befeuchtung verzichtet werden kann. Typische Temperaturen des Kühlfluids der ausführungsgemäßen Anordnung liegen zwischen 12°C und 18°C.

In einer konkreten Ausgestaltung des Wärmetauschers sind die Luftströmungskanäle durch parallel zueinander angeordnete Blechlagen definiert, die jeweils parallel zur Strömungsrichtung des Luftstroms ausgerichtet sind. Hierdurch wird einerseits eine hohe Wärmeübertragungsrate sichergestellt, andererseits aber dem Luftstrom ein vergleichsweise nur geringer Widerstand entgegengesetzt. Bevorzugtermaßen sind die Blechlagen voneinander mindestens um 1 mm, höchstens jedoch um 5 mm beabstandet.

Die Temperierkanäle können in einer bevorzugten Ausgestaltung durch eine Mehrzahl von entlang der Strömungsrichtung des Luftstroms mäanderförmig verlaufender Rohre definiert sein, wobei die Mehrzahl der senkrecht zur Strömungsrichtung des Luftstroms ausgerichteten Rohrabschnitte mindestens 4, vorzugsweise mindestens 8, weiter vorzugsweise mindestens 18 beträgt.

Obwohl im Befeuchtungsbetrieb bereits ein relativ kalter Luftstrom von z. B. nur 5° C bis 8° C bereits durch das hier vorgeschlagene Konzept effektiv und darüber hinaus auch vom Feuchteeintrag her sehr genau befeuchtet werden kann, können gerade im Winter Situationen auftreten, bei denen eine Vorlufterwärmung wenigstens auf ein Temperaturniveau von 5° C bis 8° C notwendig erscheint. Hierzu ist nach einer bevorzugten Weiterbildung der vorliegenden Erfindung eine dem Düsenstock vorgelagerte Vorlufterwärmungseinrichtung vorgesehen. Bei dieser Vorlufterwärmungseinrichtung kann es sich insbesondere um eine Umluftbeimischeinrichtung, eine Wärmerückgewinnungseinrichtung oder ein anderweitig aufheizbares Heizregister zur bedarfsweisen Vorerwärmung des Luftstroms handeln. Mittels einer Umluftbeimischeinrichtung lässt sich ein gewisser Anteil von Raumluft erneut der Zuluft beimengen. Die entnommene Raumluft ist üblicherweise auf einem Temperaturniveau im Bereich von 20° C bis 23° C, so dass durch Beimischung dieser warmen Luft zur zugeführten kalten Außenluft sich das angestrebte Temperaturniveau von 5° C bis 8° C relativ leicht erreichen lässt.

Es wird klargestellt, dass die hier angesprochene Vorlufterwärmung über die hier angesprochene Vorlufterwärmungseinrichtung für den Befeuchtungsbetrieb notwendig ist. Wird die Klimatisierungseinrichtung zeitweise nicht im Befeuchtungsbetrieb gefahren, muss auch die Vorlufterwärmungseinrichtung nicht betrieben werden. Ist die Klimatisierungseinrichtung für Anwendungsfälle vorgesehen, in denen ein Befeuchtungsbetrieb ohnehin nicht in Betracht kommt, erscheint es zweckmäßig, die Vorlufterwärmungseinrichtung wegzulassen, da sie dann nicht benötigt wird. Dies reduziert Herstellungs- und Montageaufwand sowie den Energiebedarf im Betrieb der Anlage.

Mittels einer Wärmerückgewinnungseinrichtung kann, beispielsweise über einen Kreuzwärmetauscher, der aus dem Raum nach außen abgegebenen Abluft Wärme entzogen und diese Wärme an die zugeführte Außenluft übertragen werden, um einen Zuluftstrom auf einem Temperaturniveau von 5° C bis 8° C zu gewährleisten. Selbstverständlich kann auch ein anderweitig aufheizbares Heizregister vorgesehen sein, das beispielsweise auch mit ohne abzukühlendem Prozessfluid oder anderweitig verfügbarer Abwärme beheizt werden kann. Notfalls kann das anderweitig aufheizbare Heizregister aber auch separat, beispielsweise durch ein Wärmefluid aus einer Wärmequelle, elektrisch oder durch Erwärmung mittels fossiler Brennstoffe beheizt werden.

In einer fakultativen möglichen, in vielerlei Hinsicht höchst interessanten Ausführungsvariante bilden Düsenstock und Wärmetauscher ein vormontierbares Modul aus, das in einen Luftkanal geeigneten Querschnitts einsetzbar ist. Hierdurch können beide Elemente herstellerseits zu einer Einheit vormontiert und dabei in besonders günstiger Weise aufeinander abgestimmt werden. Hierdurch lassen sich Herstellungs- und Montagekosten weiter verringern.

In einer weiteren möglichen Ausgestaltung ist abstromseitig des Wärmetauschers eine Nachwärmeinrichtung angeordnet zur bedarfsweisen Nachwärmung des Luftstroms, insbesondere im Entfeuchtungsbetrieb.

Nach einem weiterhin bevorzugten Aspekt ist die Nachwärmeinrichtung zur Montage außerhalb des Kanals, insbesondere im Teilstromprinzip, also parallel zum im Kanal geführten Luftstrom, ausgebildet. In dieser Ausgestaltung behindert die Nachwärmeinrichtung in den übrigen Betriebsmodi, also im Befeuchtungsbetrieb, Heizbetrieb und Kühlbetrieb sowie im Entkeimungsbetrieb nicht den im Kanal geführten Luftstrom, so dass die Gesamtenergiekosten der Anlage weiter verringert werden können, zumal die Nachwärmeinrichtung im Normalfall nur im Entfeuchtungsbetrieb in Betracht gezogen wird und der Entfeuchtungsbetrieb einen verglichen zu den anderen Betriebsmodi eher seltenen Betriebsmodus darstellt.

In einer bevorzugten Ausgestaltung weist der Wärmetauscher in Strömungsrichtung des Luftstroms eine Ausdehnung zwischen 200 mm und 800 mm, insbesondere zwischen 300 mm und 600 mm auf. Eine solche Länge hat sich in praktischen Versuchen als sinnvoll erwiesen.

Die Gesamtlänge einer Klimatisierungseinrichtung, die neben dem Wärmetauscher sowie dem vorgelagerten Düsenstock auch eine Ventilatoreneinheit sowie eine Vorlufterwärmungseinrichtung sowie eine Nachwärmeinrichtung aufweisen kann, kann von der Eintrittsseite der Vorlufterwämungseinrichtung bis zur Austrittsseite der Nachwärmeinrichtung eine Länge in Kanallängserstreckung von weniger als 3 m, vorzugsweise weniger als 2 m aufweisen, so dass auch eine derartige Gesamtanlage herstellerseits vormontiert, ggf. herstellerseits ausgetestet und als völlig betriebsbereite Anlage am Einsatzort in Betrieb genommen werden kann. Aufgrund der relativ geringen Längserstreckung in Kanalrichtung ist der bauseits vorzusehende Platzbedarf deutlich verringert. Es kommen daher auch andere Einbausituationen bzw. sogar Einbaulagen in Betracht; neben der bislang relativ üblichen horizontalen Ausrichtung des Kanals wären auch vertikale Aufstellungen denkbar, wobei in diesem Fall bevorzugterweise der Luftstrom in Gravitationsrichtung nach unten gerichtet sein sollte.

Bevorzugtermaßen ist eine Befeuchtungsstrecke, über welche in den Luftstrom Wasser abgegeben wird, vergleichsweise kurz bemessen, und beträgt weniger als 900 mm, vorzugsweise weniger als 800 mm, besonders bevorzugt etwa 500 mm bis 600 mm. Während es beim Stand der Technik notwendig war, den Luftstrom wenigstens größtenteils über die Befeuchtungsstrecke mit dem Befeuchtungsfluid zu versehen, das Befeuchtungsfluid also innerhalb der freien Befeuchtungsstrecke vom Luftstrom aufgenommen werden musste, beruht ein Gedanke der vorliegenden Erfindung auf einer Abkehr von diesem Prinzip, nämlich, dass ein wesentlicher, unter Umständen auch der Hauptanteil der Zuführung von Befeuchtung an den Luftstrom nicht innerhalb der freien Befeuchtungsstrecke verfolgen braucht, sondern innerhalb des Wärmetauschers selbst vorgenommen werden kann, der weiter vorzugsweise, in einem besonderen Betriebszustand auf einfache und mehr oder weniger automatische Weise zuverlässig entkeimt werden kann.

Nach einem besonders bevorzugten Aspekt der vorliegenden Erfindung ist der Wärmetauscher mindestens zum Entfeuchten des Luftstroms (Entfeuchtungsbetrieb) und/oder zur Abkühlung des Luftstroms (Kühlbetrieb) sowie gleichzeitig zur Austrocknung befeuchteter oder nasser Flächen (Entkeimungsbetrieb) ausgebildet, um im Kühlbetrieb bzw. im Entfeuchtungsbetrieb die gegebene Feuchte bzw. nasse Flächen an dem Wärmetauscher selbst bzw. seinem Umfeld, insbesondere auch eine zugeordnete Wasserablauffläche, insbesondere durch Erwärmung vollständig abtrocknen und hierdurch entkeimen zu können.

Nach einem weiteren Aspekt der vorliegenden Erfindung ist unterhalb des Wärmetauschers eine Wasserablauffläche angeordnet, die mit einem Ablauf, insbesondere einer Ablaufrinne, zusammenwirkt. Weiter vorzugsweise ist die Anordnung so getroffen, dass die Wasserablauffläche derart mit dem Wärmetauscher zusammenwirkt, dass im Entkeimungsbetrieb die Wasserablauffläche abgetrocknet, insbesondere vollständig abgetrocknet wird.

In einer möglichen Ausgestaltung ist die Wasserablauffläche sich sowohl unterhalb des Wärmetauschers als auch unterhalb des Düsenstocks erstreckend ein- oder mehrteilig zusammenhängend ausgebildet.

Bevorzugtermaßen ist der Wärmetauscher derart ausgebildet bzw. derart an einer Wärme- und Kältequelle angeschlossen, dass mindestens zwei, vorzugsweise mindestens drei, weiter vorzugsweise vier, besonders bevorzugt alle bereits genannten Funktionen
- Nachverdunstung von im Luftstrom mitgerissener Befeuchtungspartikel (Befeuchtungsbetrieb) und/oder
- Aufheizen des Luftstroms (Heizbetrieb) und/oder
- Abtrocknung befeuchteter oder nasser Flächen (Entkeimungsbetrieb) und mindestens einen Wärmeabfuhr-Betriebszustand, beispielsweise
- Abkühlung des Luftstroms (Kühlbetrieb) und/oder
- Entfeuchtung des Luftstroms (Entfeuchtungsbetrieb),
durch den Wärmetauscher ausgeübt werden können.

Gemäß einem weiteren Aspekt der Erfindung, kann in einer Ausführungsform die Klimatisierungseinrichtung eine Bodenwanne aufweist, in welcher im Kühlbetrieb im Wärmetauscher kondensiertes und abgeschiedenes Wasser aufgefangen und/oder aus welcher dieses Wasser abgeleitet werden kann. Damit können einerseits eine gezielte Reinigung bzw. Wartung gewährleistet werden und andererseits kann das abgeschiedene Wasser über nur geringe Wegstrecken geeignet ausgeleitet und anschließend möglicherweise aufgefangen werden.

Das erfindungsgemäße Verfahren sieht im zunächst vorrangigen Befeuchtungsbetrieb die Aufheizung des Luftstroms unter gleichzeitiger Verdunstung von im Luftstrom mitgerissener Befeuchtungspartikel in Strömungsrichtung nach der Besprühung vor.

Das Verfahren zum Konditionieren eines in einem Kanal geführten Luftstrom kann zudem neben dem zentralen Betriebsmodus des Befeuchtungsbetriebes auch in bevorzugter Ausgestaltung noch weitere Betriebsmodi vorsehen, nämlich einen Heizbetrieb zur Aufheizung des Luftstroms und/oder einen Entfeuchtungsbetrieb zur Entfeuchtung des Luftstroms und/oder einen Kühlbetrieb zur Abkühlung des Luftstroms und/oder einen Entkeimungsbetrieb zur Abtrocknung befeuchteter oder nasser Flächen. Diese unterschiedlichen Betriebsmodi lassen sich jeweils durch entsprechende Verwendung des ohnehin im Befeuchtungsbetrieb notwendigen Wärmetauschers erzielen.

Nach einem bevorzugten Aspekt des Verfahrens wird die Aufheizung in einem Wärmetauscher vorgenommen, der gleichzeitig als Tropfenabscheider wirkt.

Nach einem besonders bevorzugten Aspekt der vorliegenden Erfindung wird zur Nachverdunstung von dem Luftstrom mitgerissener Befeuchtungspartikel (Befeuchtungsbetrieb) und/oder zur Aufheizung des Luftstroms (Heizbetrieb) die Beschickung des Wärmetauschers mit Wärmefluid in Strömungsrichtung des Luftstroms vorgenommen. Hierdurch trifft der relativ kalte mit Befeuchtungspartikeln beladene Luftstrom eingangsseitig auf einen dort relativ heißen Wärmetauscher, so dass eine effektive Verdunstung von der Eintrittsseite des Luftstroms am Wärmetauscher realisiert wird.

Nach einem ebenfalls bevorzugten Aspekt der vorliegenden Erfindung wird zur Abkühlung des Luftstroms (Kühlbetrieb) und/oder zur Entfeuchtung des Luftstroms (Entfeuchtungsbetrieb) die Beschickung des Wärmetauschers mit einem Kältefluid entgegen der Strömungsrichtung des Luftstroms vorgenommen. Im Kühlbetrieb bzw. Entfeuchtungsbetrieb wird der Wärmetauscher also im Gegenstromprinzip beschickt.

Nach einem weiterhin bevorzugten Aspekt des vorliegenden Verfahrens wird dem Wärmefluid bzw. dem Kältefluid ein einstellbarer Anteil an Umlauffluid beigemischt, um eine jeweils gewünschte Vorlauftemperatur zu erzielen bzw. aufrechtzuerhalten.

Die Fließgeschwindigkeit des Wärme- und/oder Kältefluids durch die Temperierkanäle ist bevorzugtermaßen einstellbar, weiter vorzugsweise in einem Fließgeschwindigkeitsbereich von 0,5 m/s bis 10 m/s, insbesondere von 0,5 m/s bis 8 m/s und vorzugsweise von 0,5 m/s bis 5 m/s.

Nach einem weiteren Aspekt der vorliegenden Erfindung wird im Entfeuchtungsbetrieb der entfeuchtete Luftstrom im Vollstrom- oder im Teilstromprinzip nacherwärmt. Das letztgenannte Teilstromprinzip bietet bei entsprechender Auslagerung der Nacherwärmung den Vorteil, dass der Luftstrom ansonsten in anderen Betriebsmodi (Befeuchtungsbetrieb, Heizbetrieb, Kühlbetrieb, Entkeimungsbetrieb) nicht behindert ist.

Nach einem weiteren, vorteilhaften Aspekt der vorliegenden Erfindung wird die Eingangstemperatur des Luftstroms vor dem Wärmetauscher im Befeuchtungsbetrieb, bzw. wenn ein oder mehrere Düsenstöcke zur Befeuchtung des Luftstromes vorgesehen sind, mindestens auf einem Mindesttemperaturniveau von z. B. 5° C bis 8° C gehalten; liegt die Temperatur der Außenluft unterhalb dieses Mindesttemperaturniveaus, werden Maßnahmen zur Vorerwärmung des Luftstroms getroffen, so dass das Mindesttemperaturniveau von z. B. 5° C bis 8° C nicht unterschritten wird.

Nach einem bevorzugten Aspekt der vorliegenden Erfindung lässt sich die Mindesttemperatur von z. B. 5° C bis 8° C insbesondere im Winter durch eine oder eine Kombination der folgenden Maßnahmen erzielen:
- Nutzung der Abwärme der Ventilatoren
- Wärmerückgewinnung aus der das Gebäude verlassenen Abluft oder aus anderweitig anfallender Abwärme
- Beimischung von Umluft
- Aufheizung durch ein Heizregister.

Das erfindungsgemäße Verfahren sieht bevorzugtermaßen in einem weiteren Betriebsmodus auch einen Entkeimungsschritt vor, bei dem insbesondere bei reduzierter, abgeschalteter oder umgepolter Luftströmung der Wärmetauscher auf eine Entkeimungstemperatur zur Abtrocknung des Wärmetauschers, vorzugsweise auch eines unter dem Wärmetauscher angeordneten Bodens und/oder einer Ablaufrinne erhitzt wird. Der Entkeimungsschritt wird vorzugsweise in festgelegten Intervallen, beispielsweise einmal täglich nach Betriebsschluss durchgeführt, so dass eine Keimbildung, die dann zu befürchten wäre, wenn sich die befeuchteten oder nassen Flächen nicht trocknen ließen, vermieden wird. Beispielsweise könnte der Entkeimungsschritt eine Beschickung des Wärmetauschers mit einem Wärmefluid von 80° C über einen Zeitraum von 10 Minuten bis 15 Minuten vorsehen, wobei letztendlich ein so hoher Wärme- bzw. Energieeintrag sichergestellt sein muss, dass die befeuchteten oder nassen Flächen restlos abgetrocknet werden. Sofern die durch Aufheizung der befeuchteten oder nassen Flächen entstandene Feuchtigkeit aus dem Luftkanal 50 ausgetragen werden soll, so kann dies über die noch näher zu beschreibende Ventilatoreneinheit beispielsweise dergestalt erfolgen, dass die durch den Entkeimungsschritt befeuchtete Luft in den Raum ausgeblasen wird. Eine andere, möglicherweise bevorzugte Alternative besteht darin, die Ventilatoreneinheit in einem umgepolten Betriebsmodus ggf. auch nur mit geringer Drehzahl zu betreiben, um so die feuchte Luft entgegen der normalen Fließrichtung des Luftstroms aus dem Gebäude auszutragen.

Weiterhin ist es etwa in Kombination mit den vorbeschriebenen Ausführungsformen der Klimatisierungseinrichtung denkbar,dass eine Ventilatoreneinheit zur Beförderung eines bzw. des in einem Kanal geführten Luftstroms vorgesehen ist, wobei der Luftstrom strömungstechnisch vor oder nach der Ventilatoreneinheit mit Druckwasser, insbesondere mittels einer Klimatisierungseinrichtung wie vorstehend erläutert, befeuchtet wird, wobei die Ventilatoreneinheit eine Mehrzahl von Axialventilatoren umfasst und wobei mindestens zwei Axialventilatoren strömungstechnisch hintereinander geschaltet angeordnet sind. Dieses Prinzip kann sowohl in klimatechnischen Anlagen allgemein, als auch unabhängig von einer Zuluftbefeuchtung, also beispielsweise in einem Abluftkanal zur Abführung von Abluft aus einem klimatisierten Raum, eingesetzt werden. Darüber hinaus ist dieses Prinzip auch nicht auf klimatechnische Anlagen beschränkt, sondern kann in diesem Fall wiederum in Kombination mit der bereits erwähnten Befeuchtung des Luftstroms vor oder nach der Ventilatoreneinheit zur Kühlung eines zu kühlenden Fluids, beispielsweise eines Prozessfluids, eingesetzt werden.

Es hat sich überraschenderweise gezeigt, dass durch die Hintereinanderschaltung von zwei oder mehr Axialventilatoren ein Luftstrom mit jeweils gewünschter Luftgeschwindigkeit von z. B. 2,5 m/s angetrieben werden kann, wobei die Axialventilatoren bei Hintereinanderschaltung mit - im Vergleich zum Vorsehen nur eines Axialventilators in Strömungsrichtung - deutlich reduzierter Drehzahl betrieben werden können. Hierdurch wird die Geräuschentwicklung entscheidend verringert. Darüber hinaus haben erste Versuche auch Hinweise dafür ergeben, dass die Qualität des erzeugten Luftstroms, der einem laminaren Luftstrom möglichst nahe kommt und möglichst wenig Verwirbelungen ausbilden soll, erheblich verbessert ist.

Die Hintereinanderschaltung der Axialventilatorener wirkt - bei der Hintereinanderschaltung von zwei Axialventilatoren eine deutliche Erhöhung des Förderdrucks gegenüber dem Vorsehen nur eines einzigen Ventilators, nämlich um den Faktor 2. Durch die Hintereinanderschaltung wird insofern der Druck deutlich erhöht, so dass mehr Volumen gefördert wird. Bei einem vorgegebenen bzw. gewünschten Volumenstrom lässt sich die Anordnung aus hintereinandergeschalteten Axialventilatoren insofern mit deutlich reduzierter Drehzahl gegenüber einer Anordnung, bei der in Strömungsrichtung lediglich ein Ventilator vorgesehen ist, betreiben.

Zu erwähnen ist auch, dass durch das Vorsehen von Axialventilatoren die Gesamtbaulänge auch bei Vorsehen von zwei Ventilatoren nicht bzw. nicht merklich erhöht wird. Herkömmlicherweise werden Radialventilatoren eingesetzt, die meist über Keilriemengetriebe angetrieben werden, so dass die Baulänge einer derartigen herkömmlichen Anordnung mit nur einem Ventilator meist über der Baulänge der hier vorgeschlagenen Hintereinanderschaltung von zwei Axialventilatoren liegen dürfte.

Sofern über einen Querschnitt des Luftstroms verteilt mehrere Ventilatoren vorgesehen sind, so ist bevorzugtermaßen auch vorgesehen, dass alle über den Querschnitt verteilt angeordneten Ventilatoren selbst auch Bestandteil einer Hintereinanderschaltung von zwei oder mehr Ventilatoren sind.

Vorzugsweise sind die hintereinander angeordneten Ventilatoren in ihren Achsen fluchtend unabhängig angetrieben oder auf einer gemeinsamen Welle gemeinsam angetrieben.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Gesamtanordnung einer herkömmlichen Klimatisierungseinrichtung nach dem Stand der Technik;
- Fig. 2: ein Ausführungsbeispiel einer Klimatisierungsanordnung nach der vorliegenden Erfindung;
- Fig. 3: eine abgewandelte Ausführungsform einer Klimatisierungseinrichtung nach der vorliegenden Erfindung;
- Fig. 4a: eine schematische Seitenansicht einer Ausführungsform eines Wärmetauschers in einer ersten Seitenansicht quer zum Luftstrom;
- Fig. 4b: eine schematische Draufsicht auf den Wärmetauscher nach Fig. 4a in Eintrittsrichtung des Luftstroms.

Bei der nachfolgenden Beschreibung werden für gleiche und gleich wirkende Teile dieselben Bezugsziffern verwendet.

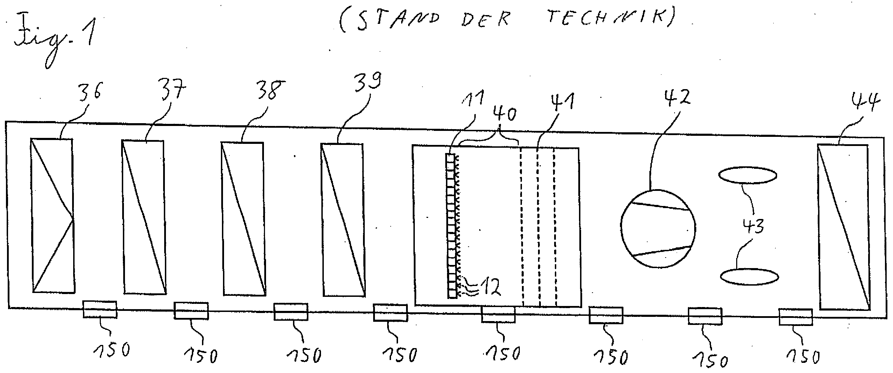

In Fig. 1 ist eine Gesamtanlage einer herkömmlichen Luftbefeuchtungseinrichtung veranschaulicht, die sich durch eine Vielzahl von Komponenten auszeichnet.

In Strömungsrichtung des Luftstroms betrachtet, ist eingangsseitig zunächst ein Filter 36 vorgesehen. Dem Filter 36 nachgeschaltet ist eine als Wärmerückgewinnungseinrichtung ausgebildete Vorlufterwämungseinrichtung 37. Mit der Vorlufterwärmungseinrichtung 37 kann Abwärme aus aus dem Raum abgeführter Abluft entnommen und auf den hier maßgeblichen Zuluftstrom übertragen werden. Da die als Wärmerückgewinnungseinrichtung ausgebildete Vorlufterwärmungseinrichtung 37 nicht ausreicht, um den Luftstrom auf Raumtemperatur bzw. im Hinblick auf die mit der Luftbefeuchtung auftretende Verdunstungsenthalpie darüber zu erhitzen, ist beim Stand der Technik weiterhin ein relativ groß dimensionierter Vorerhitzer 38 vorgesehen, der den Luftstrom auch im Winter mindestens auf Raumtemperatur bzw. im Hinblick auf die mit der anschließenden Befeuchtung entstehende Verdunstungsenthalpie auch darüber erwärmen muss. Der Vorerhitzer 38 muss insofern eine erhebliche Baulänge in Strömungsrichtung der Luft aufweisen. Darüber hinaus ist die Aufheizung des Vorerhitzers 38 energieintensiv.

Um auch einen gerade im Sommer oftmals erforderlichen Kühlbetrieb realisieren zu können, schließt sich an den Vorerhitzer 38 ein Kühlregister 39 an. Das Kühlregister 39 kann bedarfsweise zur Kühlung des Luftstroms mit Kühlfluid beschickt werden.

An das Kühlregister 39 schließt sich nun die eigentliche Luftbefeuchtungseinrichtung in Gestalt eines mit einer Vielzahl von Düsen 12 bestückten Düsenstocks 11 an. Mittels der Düsen 12 wird feinst vernebeltes Befeuchtungsfluid, insbesondere Wasser in dem bereits relativ hoch erwärmten Luftstrom eingebracht, so dass es über die vorgegebene Verdunstungsstrecke 40 verdunsten kann. Befeuchtungspartikel, die über die freie Verdunstungsstrecke 40 nicht verdunstet sind, werden in einem herkömmlichen Tropfenabscheider 41 aufgefangen. Ein Abtrocknen oder Entkeimen ist bei den herkömmlichen Luftbefeuchtungseinrichtungen nicht automatisch, das heißt anlagenseitig möglich, sondern müsste, was letztlich nicht erfolgt, manuell durchgeführt werden. Beim herkömmlichen Kühlregister 39 besteht weiterhin das Problem, dass dieses selbst, sowie der darunterliegende Boden nach entsprechendem Betrieb nass bzw. feucht sein kann, wobei diese Nässe bzw. Feuchtigkeit lange Zeit erhalten bleibt und so Bakterien- und Keimbildung zu befürchten stehen. Eine herkömmliche Ventilatoreneinheit 42 schließt sich an. Der Ventilatoreneinheit 42 nachgeschaltet sind Schalldämpfungseinrichtungen 43, um die erheblichen Geräuschemissionen der herkömmlichen Ventilatoreneinheit 42 abzumildern.

An die Ventilatoreneinheit 42 bzw. die Schalldämpfungseinrichtungen 43 schließt sich bei der herkömmlichen Anlage noch ein Nacherwärmer 44 an, der im Entfeuchtungsbetrieb den Luftstrom auf ein für ein gewünschtes Raumklima erforderliches Temperaturniveau nacherwärmt. Der herkömmliche Nacherwärmer 44 ist dabei innerhalb des Querschnitts des Luftkanals angeordnet und wird im Vollstromprinzip durchströmt.

Zwischen den einzelnen Komponenten im Kanal ist jeweils seitlich im Kanal eine Tür 150 angeordnet, um einen Wartungszugang zu den einzelnen Komponenten zu ermöglichen.

Die herkömmliche Ventilatoreneinheit 42 muss insgesamt eine erhebliche Leistung erbringen, da der Luftstrom alle genannten Komponenten durchdringen muss. Da die Komponenten seriell angeordnet sind, ist die Baulänge der Gesamtanlage erheblich. Sämtliche Einzelkomponenten sind wartungsintensiv. Um diese Wartung überhaupt durchführen zu können, müssen die Komponenten mindestens 600 mm beabstandet sein und dieser Zwischenraum mittels einer in der Kanallängswand vorgesehenen Tür für das Wartungspersonal betretbar sein. Auch das Vorsehen der Türen bzw. der Zugänglichkeit für das Wartungspersonal trägt zu der erheblichen Gesamtlänge sowie zu den erheblichen Herstellungs- und Montagekosten bei. Der Raumbedarf, also auch die umbaute Gebäudefläche zur Aufstellung der Anlage, ist beträchtlich.

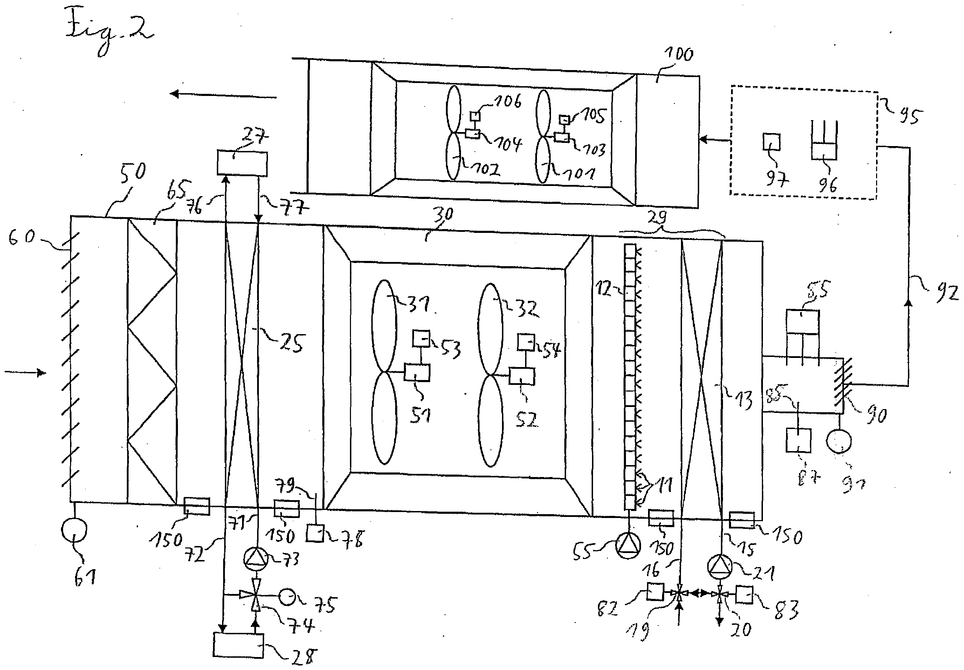

Mit den erfindungsgemäßen Überlegungen kann man Herstellungs- und Montagekosten sowie die angesprochene Baulänge erheblich reduzieren. Dabei löst sich die Erfindung von einer Reihe bestehender Vorurteile, wie bereits eingangs angesprochen. Ein mögliches Ausführungsbeispiel der vorliegenden Erfindung wird nachstehend unter Bezugnahme auf Fig. 2 näher erläutert.

Die erfindungsgemäße Klimatisierungseinrichtung ist in einen Luftkanal 50 eingebaut. Am Eingang des Luftkanals 50 ist eine Außenluftklappe 60 vorgesehen, die durch einen Motor 61 bewegt wird, wodurch der Öffnungsgrad des Luftkanals 50 verändert werden kann. Zwischen dem völlig geöffneten Zustand und dem völlig geschlossenen Zustand der Außenluftklappe 60 sind mehrere Zwischenzustände einstellbar. Durch die Außenluftklappe 60 kann im (teilweise) geöffneten Zustand Außenluft in den Luftkanal 50 eindringen.

Anschließend durchläuft die Außenluft einen Außenluftfilter 65 innerhalb des Luftkanals 50. Dieser Außenluftfilter 65 filtert die Luft, insbesondere von Schmutz in Form von Schwebstoffen sowie von allergenen Substanzen, beispielsweise von Pollen.

Hierauf folgend in Strömungsrichtung der Luft ist eine Vorlufterwärmungseinrichtung 25 vorgesehen. Beim Durchströmen der Luft durch diesen wird die Außenluft auf eine Mindesttemperatur von 5 °C bis 8 °C vorgewärmt, wenn die Außenlufttemperatur unter dieser Mindesttemperatur liegen sollte. Die Vorlufterwärmungseinrichtung 25 wird durch eine Zuleitung 71 mittels einer Pumpe 73 mit einem Wärmefluid, beispielsweise Warmwasser, aus einer Wärmefluidquelle 28 versorgt. Das Wärmefluid verlässt die Vorlufterwärmungseinrichtung 25 durch eine Ableitung 72. Wenn der Temperaturunterschied zwischen dem Wärmefluid und der gewünschten Mindesttemperatur sehr hoch, kann ein Teil des abgeleiteten Wärmefluids durch ein Dreiwegeventil 74, das durch einen Motor 75 gesteuert wird, direkt in die Vorlufterwärmungseinrichtung 25 rückgeführt werden. Hierzu steht die Ableitung 72 mit der Zuleitung 71 in Fluidkontakt über das Dreiwegeventil 74. Zusätzlich oder anstelle dieser Wärmefluidversorgung durch ein Heizregister 28 kann die Vörlufterwärmungseinrichtung 25 durch eine Zuleitung 76 ein erwärmtes Fluid, vorzugsweise Wasser, aus einer Wärmerückgewinnungseinrichtung 27 zugeführt werden. Das Fluid verlässt die Vorlufterwärmungseinrichtung 25 durch eine Ableitung 77. Anstelle der Wärmerückgewinnungseinrichtung 27 kann das Fluid auch aus einer Umluftbeimischeinrichtung zugeführt werden.

Die Vorlufterwärmungseinrichtung 25 ist nur notwendig, sofern die Anlage im Befeuchtungsbetrieb gefahren wird. Wird die Anlage in einem der anderen Betriebsmodi gefahren, muss die Vorlufterwämungseinrichtung nicht betrieben werden; ist ein Befeuchtungsbetrieb überhaupt nicht vorgesehen, ist es zweckmäßig, auf die Vorlufterwärmungseinrichtung 25 gänzlich zu verzichten, so dass die Baulänge weiter verkürzt, herstellungs- und Montagekosten eingespart sowie im Betrieb Energiekosten verringert werden können.

Als nächstes Bauelement in Richtung der Strömungsrichtung der Luft ist ein Feuchtigkeitssensor 78 vorgesehen, der über einen Fühler 79 die Feuchtigkeit der Luft im Luftkanal 50 misst. Mittels dieser Messung wird bestimmt, wie viel Befeuchtungsfluid der Luft in einem der nächsten Schritte zugeführt oder abgeführt werden muss, damit eine gewünschte Feuchtigkeit der Luft, die in den zu klimatisierenden Raum 95 geführt wird, erreicht wird.

Innerhalb des Luftkanals 50 ist als nächstes zentral eine Ausführungsform einer gemäß einem unabhängigen Aspekt der vorliegenden Erfindung beanspruchten Ventilatoreneinheit 30 angeordnet, die zwei in Strömungsrichtung hintereinander angeordnete Axialventilatoren 31, 32 umfasst. Die Axialventilatoren 31, 32 sind zueinander so angeordnet, dass Ihre Achsen fluchten; beide Axialventilatoren 31, 32 werden jedoch jeweils unabhängig von einem separaten Motor 51, 52 angetrieben, der jeweils mit einem Frequenzumwandler 53, 54 zusammenwirkt. Der Ventilatoreneinheit 30 strömungstechnisch nachgeschaltet ist ein Düsenstock 11, der mit einer Vielzahl von Düsen 12 bestückt ist. Über die Düsen 12 des Düsenstocks 11 lässt sich Befeuchtungsfluid, insbesondere Wasser in den Luftstrom einbringen. Hierfür ist eine Hochdruckpumpe 55 vorgesehen, die vorzugsweise in ihrer Förderleistung einstellbar ist, beispielsweise über einen Frequenzumformer. Insbesondere arbeitet die erfindungsgemäße Vorrichtung bzw. das erfindungsgemäße Verfahren mit dem Prinzip der Hochdruckzerstäubung von Wasser, das heißt es wird durch die Zerstäubung von Wasser unter hohem Druck ein Aerosolnebel erzeugt mit Tröpfchengrößen von deutlich unter 1 mm Durchmesser, wobei das erfindungsgemäße Prinzip auch bei größeren Tropfengrößen erhalten bleibt. Druckniveaus zur Beschickung der Düsen mit Befeuchtungsfluid liegen üblicherweise in einem Bereich von 10 bar bis 150 bar, wobei sich akzeptable Ergebnisse auch bei geringeren Drücken, das hießt 1,5 bar bis 10 bar erzielen lassen.

In Strömungsrichtung nachgeschaltet, ist ein Wärmetauscher 13 vorgesehen. Der Abstand zwischen Düsen 12 und Eintrittsseite des Wärmetauschers 13 kann beispielsweise lediglich 900 mm bis 400 mm, vorzugsweise lediglich etwa 600 mm betragen. Der Wärmetauscher 13 weist in Fig. 2 nicht gezeigte Luftströmungskanäle 14 sowie in Fig. 2 ebenfalls nicht gezeigte Temperierkanäle 17 auf. Der Luftstrom wird dabei durch die im Wesentlichen in Längserstreckung des Luftkanals 50 ausgerichteten Luftströmungskanäle 14 geführt. Die Temperierkanäle 17 können zu den Luftströmungskanälen beispielsweise orthogonal ausgerichtet sein. Die Temperierkanäle 17 lassen sich mit einem Wärmefluid oder Kältefluid beschicken.

Der Wärmetauscher 13 wird durch Anschlüsse 15, 16 mit einem Wärmefluid oder Kältefluid versorgt. Die Anschlüsse 15, 16 stehen über zwei Mischventile 19, 20, die durch jeweils einen Motor 82, 83 geöffnet bzw. geschlossen werden, in Fluidverbindung, so dass ein Teil des Fluids in einem Kreislauf direkt in den Wärmetauscher 13 zurückgeführt werden kann. Ein Rückführen eines Teil des Fluids direkt in den Wärmetauscher 13 ist insbesondere vorteilhaft, wenn der Unterschied zwischen der gewünschten Lufttemperatur und der Temperatur des Wärmefluids oder Kältefluids zu groß ist. Das Fluid wird mittels einer Wärmetauscherpumpe 21, die in einem der Anschlüsse 15, 16 angeordnet ist, dem Wärmetauscher 13 zugeführt. Der Düsenstock 11 und die Wärmetauscher 13 bilden ein vormontierbares Modul 29, welches als Luftkonditioniereinrichtung ausgebildet sein kann.

Nach Durchströmen des Wärmetauschers 13 wird durch einen weiteren Feuchtigkeitssensors 85 mittels eines Feuchtigkeitsfühlers 86 die Feuchtigkeit der Luft bestimmt. Ein Temperatursensor 87 mit einem Temperaturfühler 88 stellt die Temperatur der Luft fest. Durch die Messung dieser Werte kann die Klimatisierungseinrichtung insbesondere die Menge an Befeuchtungsfluid, die der Luft in dem Düsenstock 12 zugeführt wird, und die Wärme, die durch die Vorlufterwärmungseinrichtung 25 und dem Wärmetauscher 13 zugeführt wird, derart einstellen, dass eine gewünschte Temperatur und eine gewünschte Feuchtigkeit der Luft am Ende des Kanals 50 erreicht wird.

In Strömungsrichtung der Luft ist nachfolgend eine Zuluftklappe 90 angeordnet, die durch einen Motor 91 geöffnet oder geschossen werden kann. Zwischenzustände der Zuluftklappe 90, wie z.B. halb geöffnet, ein Viertel geöffnet etc., sind durch den Motor ebenfalls einstellbar. Durch eine Zuluftführung 92 wird die klimatisierte Luft dem zu klimatisierenden Raum 95 durch eine oder mehrere Öffnungen zugeführt. Der zu klimatisierende Raum 95 kann beispielsweise eine Montagehalle, ein Büroraum, eine Wohnung, ein Laborraum oder eine Lagerhalle sein. In dem zu klimatisierenden Raum 95 sind ein weiterer Feuchtigkeitssensor 96 und ein weiterer Temperatursensor 97 zur Einstellung, insbesondere Regelung bzw. Überwachung der Feuchtigkeit und der Lufttemperatur angeordnet. Bei größeren Räumen bietet es sich an, mehrere Feuchtigkeits- und Temperatursensoren über den Raum verteilt anzuordnen, damit lokale Feuchtigkeits- und Temperaturschwankungen der Luft im Raum 95 die Messungen weniger stark beeinflussen bzw. entsprechend ausgemittelt werden können.

Die Abluft des Raums 95 wird mittels einer Abluftventilatoreinheit 100 durch einen Abluftkanal 99 aus dem Raum abgesaugt. Die Abluftventilatoreinheit verfügt über zwei in Strömungsrichtung hintereinander angeordnete Axialventilatoren 101, 102. Die Axialventilatoren 101, 102 sind zueinander so angeordnet, dass Ihre Achsen fluchten; beide Axialventilatoren 101, 102 werden jedoch jeweils unabhängig von einem separaten Motor 103, 104 angetrieben, der jeweils mit einem Frequenzumwandler 105, 106 zusammenwirkt. Auch bei Hintereinanderschaltung von Axialventilatoren in der Abluft lässt sich eine deutliche Geräuschlimitierung erreichen, so dass auch hier das Prinzip der Hintereinanderschaltung der Axialventilatoren bevorzugt wird.

Die unabhängig erfinderische Idee der Hintereinanderschaltung von Axialventilatoren zur Beförderung eines Luftstroms wird ganz generell eigenständig beansprucht, und zwar unabhängig von der konkreten Einsatzsituation. Neben den hier konkret beschriebenen Einsatzsituationen, nämlich beispielsweise im Zuluftkanal einer Klimatisierungseinrichtung bzw. im Abluftkanal einer Klimatisierungseinrichtung, lässt sich das Prinzip der Hintereinanderschaltung von Axialventilatoren zur Beförderung eines Luftstroms auch dann einsetzen, wenn im Luftstrom andere Ziele als die Klimatisierung eines Raums verfolgt werden, beispielsweise die Kühlung bzw. Rückkühlung von Medien, die Einbringung von Luft in einen Fertigungsprozess, etc. Durch die Hintereinanderschaltung von Axialventilatoren addieren sich die von den Ventilatoren jeweils geleisteten Druckdifferenzen, so dass bei zwei Ventilatoren eine Druckerhöhung um den Faktor 2, bei Hintereinanderschaltung von beispielsweise drei Ventilatoren eine Druckerhöhung um den Faktor 3 mit entsprechender Erhöhung des Fördervolumens erzielbar ist. Gleichzeitig lässt sich in dieser Anordnung dann die Drehzahl der einzelnen Ventilatoren entsprechend gering halten, so dass der in vielen Anwendungsfällen maßgebliche Vorteil einer deutlichen Geräuschreduzierung erreicht wird. Darüber hinaus haben erste Versuche ergeben, dass sich die Güte des Luftstroms (Annäherung an einen möglichst laminaren Luftstrom) bei Hintereinanderschaltung von zwei oder drei Ventilatoren verbessern lässt.

Anschließend wird die Luft als sogenannte Fortluft nach außen in die Umwelt abgeführt. Vorstellbar ist auch, dass die Luft gefiltert wird, bevor sie in die Umwelt geleitet wird, um insbesondere für die Umwelt gefährliche und/oder schädliche Substanzen zu entfernen, die aus dem zu klimatisierenden Raum 95 stammen. Die Fortluft kann auch zur Wärmerückgewinnung beispielsweise mit der Wärmerückgewinnungseinrichtung 27 in Wärmekontakt stehen.

Zwischen dem Düsenstock 12 und dem Wärmetauscher 13 sowie direkt nach dem Wärmetauscher 13 ist jeweils seitlich im Kanal eine Tür 150 angeordnet. Hierdurch wird ein Wartungszugang zu dem Düsenstock 12 und dem Wärmetauscher 13 ermöglicht.

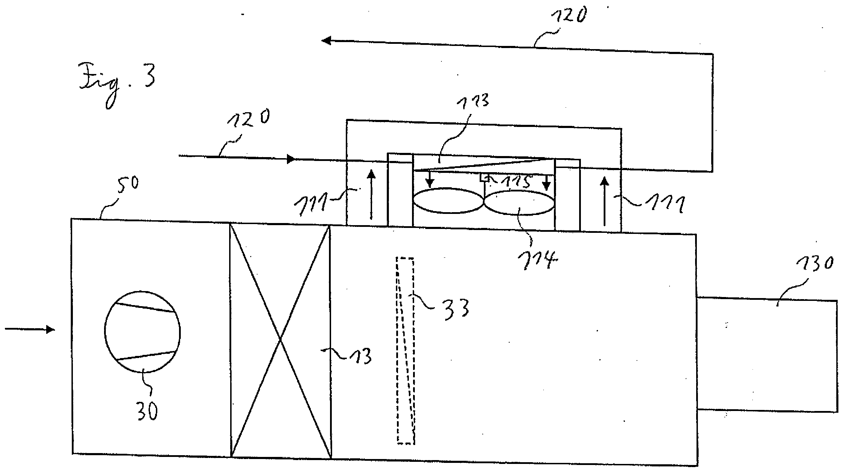

Fig. 3 zeigt einen Teil einer abgewandelten Ausführungsform einer Klimatisierungseinrichtung nach der vorliegenden Erfindung. In einem Luftkanal 50 ist eine Ventilatoreinheit 30 angeordnet, die einem Zuluftkanal 130 Außenluft zuführt. Dabei durchläuft die Außenluft nach Durchlaufen der Ventilatoreinheit 30 einen Wärmetauscher 13. In Strömungsrichtung der Luft ist in Fig. 3 dem Wärmetauscher nachfolgend eine Nachwärmeeinheit 33 gestrichelt eingezeichnet. Die Nachwärmeeinheit 33 wird zur Aufheizung bei einer notwendigen Entfeuchtung der Luft verwendet. Dies wird nur im Sommer für wenige Tage eingesetzt. Diese Anordnung der Nachwärmeeinheit 33 direkt im Kanal entspricht dem Stand der Technik. Bei der erfindungsgemäßen Vorrichtung, die in Fig. 3 mit durchgezogenen Linien dargestellt ist, ist die Nachwärmeeinheit nicht an dieser Stelle angeordnet.

Die Luft bzw. ein Teil davon wird bei der erfindungsgemäßen Vorrichtung durch Absaugkanäle 111 an einer oder mehreren Seiten des Luftkanals 50 seitlich abgeführt und einer Nachwärmeeinheit 113 zugeführt. Die abgeführte Luft wird durch einen Ventilator 114, der durch einen Motor 115 angetrieben wird, durch die Nachwärmeeinheit 113 gesogen und anschließend wieder dem Luftkanal 50 zugeführt. Durch diese Anordnung einer Nachwärmeeinheit 113 seitlich des eigentlichen Luftkanals 50 sinkt der Luftwiderstand im Kanal deutlich.

Die Nachwärmeeinheit 113 wird durch einen Fluidkanal 120 mit einem Wärmefluid versorgt bzw. dieses von der Nachwärmeeinheit weggeleitet. Das Fluid kann insbesondere Warmwasser, Warmwasser aus einer Wärmerückgewinnungseinrichtung oder Warmwasser, das als Kühlwasser einer Kältemaschine fungiert, sein.

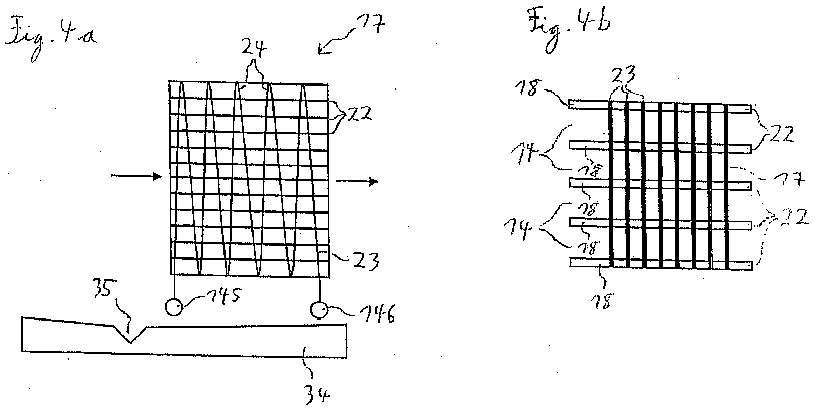

Fig. 4a zeigt eine schematische Seitenansicht einer Ausführungsform eines Wärmetauschers 13 in einer ersten Seitenansicht quer zum Luftstrom. Der Wärmetauscher 13 umfasst ein Wärmerohr 23, welches mittels Anschlüssen 145, 146 mit einem Wärmefluid oder Kältefluid versorgt wird. Die Luft durchströmt den in Fig. 4a gezeigten Temperierkanal 17 von links nach rechts. Das Wärmerohr 23 verläuft in dem gezeigten Temperierkanal 17 mäanderförmig und umfasst zehn Rohrabschnitte 24. Eine andere Anzahl von Rohrabschnitten 24 ist vorstellbar.

Fig. 4b zeigt eine schematische Draufsicht auf den Wärmetauscher 13 nach Fig. 4a in Eintrittsrichtung des Luftstroms. Die verschiedenen Luftströmungskanäle 14 werden durch Blechlagen 22 voneinander getrennt. Senkrecht zu den Blechlagen 22 bzw. Luftströmungskanälen 14 verlaufen eine Mehrzahl von Temperierkanälen bzw. Wärmerohren 23, von denen hier nur vier dargestellt sind. Die gezeigten Blechlagen 22 fungieren gleichzeitig als Tropfenabscheider 18. Unterhalb des Wärmetauschers 13 ist ein Boden 34 angeordnet. Der Boden 34 bildet eine Wasserablauffläche 45 aus. Der Boden 34 kann einstückig oder mehrstückig ausgebildet sein. Bevorzugterweise erstreckt sich der Boden 34 sowohl unterhalb des Wärmetauschers 13 als auch des Düsenstocks 11. Seine Wasserablauffläche 45 ist jeweils dem Düsenstock 12 bzw. Wärmetauscher 13 zugewandt, so dass Befeuchtungsfluid, Schwitzwasser oder im Entfeuchtungsbetrieb abgezogenes Wasser von der Wasserablauffläche 45 des Bodens 34 aufgefangen und einem Ablauf zugeführt wird, wobei der Ablauf beispielsweise als Ablaufrinne 35 ausgebildet sein kann.

Mit der erfindungsgemäßen Vorrichtung bzw. dem erfindungsgemäßen Verfahren lässt sich ein "Kombi-Klimatisierungsgerät" zumindest gemäß den als vorzugsweise angegebenen Ausgestaltungen erzielen: Es entfallen beim Stand der Technik übliche Vorerhitzer 38 komplett; auch das beim Stand der Technik separat ausgebildete Kühlregister 39 sowie das Vorsehen eines im Kanal den Luftstrom behinderten Nachwärmers 44 ist gemäß einer bevorzugten Ausgestaltung nicht länger notwendig. In Kombination mit der unabhängig beanspruchten Ventilatoreneinheit kann in den meisten Fällen darüber hinaus wohl auf Schalldämpfer verzichtet werden.

Es wird insofern eine Klimatisierungseinrichtung sowie ein entsprechendes Verfahren zum Konditionieren eines Luftstroms vorgeschlagen, mit denen sich erhebliche Einsparungen in Bezug auf die Herstellungs- und Betriebskosten, insbesondere die Energiekosten, aber auch eine damit verbundene bedeutsame CO-Emissionseinsparung erzielen lassen. Aufgrund der kompakten Baueinheit lassen sich die Reinigungskosten erheblich reduzieren, da letztendlich weniger Einzelkomponenten vorhanden sind, die zu reinigen sind.

Hinsichtlich der kürzeren Baulänge wird darauf hingewiesen, dass nicht nur Kosten in Bezug auf die Klimatisierungseinrichtung selbst, sondern auch hinsichtlich der Nutzung des umbauten Raums eingespart werden können.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 11: Düsenstock
- 12: Düsen
- 13: Wärmetauscher/Luftkonditionierungseinrichtung
- 14: Luftströmungskanäle
- 15, 16: Anschlüsse
- 17: Temperierkanäle
- 18: Tropfenabscheider
- 19, 20: Mischventil
- 21: Wärmetauscherpumpe
- 22: Blechlagen
- 23: Rohre
- 24: Rohrabschnitte
- 25: Vorlufterwärmungseinrichtung
- 27: Wärmerückgewinnungseinrichtung
- 28: Wärmefluidquelle
- 29: Modul/Luftkonditionierungseinrichtung
- 30: Ventilatoreneinheit
- 31, 32: Axialventilatoren
- 33: Nachwärmeinrichtung
- 34: Boden
- 35: Ablaufrinne
- 36: Filter
- 37: Vorlufterwämungseinrichtung
- 38: Vorerhitzer
- 39: Kühlregister
- 40: Verdunstungsstrecke
- 41: Tropfenabscheider
- 42: Ventilatoreneinheit
- 43: Schalldämpfungseinrichtungen
- 44: Nacherwärmer
- 45: Wasserablauffläche
- 50: Luftkanal
- 51, 52: Motor (Ventilatoren)
- 53, 54: Frequenzumwandler (Ventilatoren)
- 55: Hochdruckpumpe
- 60: Außenluftklappe
- 61: Motor (Außenluftklappe)
- 65: Außenluftfilter
- 71: Zuleitung (Vorlufterwärmungseinrichtung)
- 72: Ableitung (Vorlufterwärmungseinrichtung)
- 73: Pumpe (Vorlufterwärmungseinrichtung)
- 74: Dreiwegeventil (Vorlufterwärmungseinrichtung)
- 75: Motor (Dreiwegeventil)
- 76: Zuleitung (Wärmerückgewinnungseinrichtung)
- 77: Zuleitung (Wärmerückgewinnungseinrichtung)
- 78: Feuchtigkeitssensor
- 79: Fühler (Feuchtigkeitssensor)
- 82: Motor (Mischventil 19)
- 83: Motor (Mischventil 20)
- 85: Feuchtigkeitssensor
- 86: Fühler (Feuchtigkeitssensor)
- 87: Temperatursensor
- 88: Fühler (Temperatursensor)
- 90: Zuluftklappe
- 91: Motor (Zuluftklappe)
- 92: Zuluftführung
- 95: Raum
- 96: Feuchtigkeitssensor (Raum)
- 97: Temperatursensor (Raum)
- 99: Abluftkanal
- 100: Abluftventilatoreinheit
- 101, 102: Axialventilatoren
- 103, 104: Motor (Axialventilatoren)
- 105, 106: Frequenzumwandler (Axialventilatoren)
- 111: Absaugkanal
- 113: Nachwärmeeinheit
- 114: Ventilator
- 115: Motor (Ventilator)
- 120: Fluidkanal
- 130: Zuluftkanal
- 145, 146: Wärmerohranschlüsse
- 150,151: Tür

## Patentansprüche

1. Klimatisierungseinrichtung zum Konditionieren eines in einem Kanal geführten Luftstroms zur Klimatisierung eines Raumes, umfassend
- einen Düsenstock (11) mit einer Mehrzahl von über den Querschnitt des Kanals verteilt angeordneter mit Druckwasser beaufschlagter Düsen (12) zur Abgabe von Wasser, insbesondere in Form eines Sprühnebels sowie
- einen Wärmetauscher (13), der zum einen vom Luftstrom durchströmbar ausgebildet ist und eine Vielzahl von Luftströmungskanälen (14) aufweist und zum anderen Anschlüsse (15, 16) zum Durchleiten eines Wärme- und/oder Kältefluids durch ein oder mehrere Temperierkanäle (17) aufweist,
wobei der Wärmetauscher (13) dem Düsenstock (11) in Strömungsrichtung des Luftstroms nachgeschaltet angeordnet ist, **dadurch gekennzeichnet, dass** zur Nachverdunstung von im Luftstrom mitgerissener Befeuchtungspartikel und/oder zur Aufheizung des Luftstroms die Beschickung mit einem Wärmefluid so getroffen ist, dass das Wärmefluid den Wärmetauscher (13) in Strömungsrichtung des Luftstroms durchfließt und
wobei zur Abkühlung des Luftstroms und/oder zur Entfeuchtung des Luftstroms die Beschickung mit einem Kältefluid so getroffen ist, dass das Kältefluid den Wärmetauscher (13) entgegen der Strömungsrichtung des Luftstroms durchfließt.

2. Klimatisierungseinrichtung nach Anspruch 1,
**dadurch gekennzeichnet, dass**
der Wärmetauscher (13) integriert einen Tropfenabscheider (18) aufweist oder als Tropfenabscheider ausgebildet ist bzw. als Tropfenabscheider (18) wirkt.

3. Klimatisierungseinrichtung nach Anspruch 1 oder 2,
**dadurch gekennzeichnet, dass**
der Wärmetauscher (13) zur Ausübung mindestens zwei der folgenden, vorzugsweise mindestens drei der folgenden, weiter vorzugsweise mindestens vier der folgenden, besonders vorzugsweise aller folgenden Funktionen:
- Nachverdunstung von im Luftstrom mitgerissener Befeuchtungspartikel (Befeuchtungsbetrieb)
- Aufheizen des Luftstroms (Heizbetrieb)
- Abkühlung des Luftstroms (Kühlbetrieb)
- Entfeuchtung des Luftstroms (Entfeuchtungsbetrieb)
- Abtrocknung befeuchteter oder nasser Flächen (Entkeimungsbetrieb) ausgebildet ist.

4. Klimatisierungseinrichtung nach einem der vorhergehenden Ansprüche,
**dadurch gekennzeichnet, dass**
dem Wärmetauscher (13) eingangs- oder ausgangsseitig ein Mischventil (19, 20), insbesondere Drei-Wege-Ventil oder Vier-Wege-Ventil zugeordnet ist, um die Zuführung heißen Wärmefluids bzw. Kältefluids zur Einstellung einer gewünschten Vorlauftemperatur mit einem einstellbaren Anteil an Umlauffluid zu mischen.

5. Klimatisierungseinrichtung nach einem der vorhergehenden Ansprüche,
**dadurch gekennzeichnet, dass**
die Klimatisierungseinrichtung weiterhin eine - vorzugsweise in ihrer Förderleistung einstellbare - Wärmetauscherpumpe (21) umfasst, um das Wärme- bzw. Kältefluid durch den Wärmetauscher (13) zu pumpen.

6. Klimatisierungseinrichtung nach einem der vorhergehenden Ansprüche,
**dadurch gekennzeichnet, dass**
die Luftströmungskanäle (14) thermisch leitendes Material mit einem Leitfähigkeitskoeffizienten von wenigstens 50 W/(m·K), insbesondere Kupfer und/oder Aluminium umfassen.

7. Klimatisierungseinrichtung nach einem der vorhergehenden Ansprüche,
**dadurch gekennzeichnet, dass**
die Kontaktflächen der Luftströmungskanäle (14) zum Wärmeaustausch mit dem Luftstrom ausreichend groß sind, um eine Kühlung eines Luftstroms vorbestimmter relativer Feuchte auch bei Temperaturen des Kühlfluids oberhalb des Taupunktes gewährleisten zu können.

8. Klimatisierungseinrichtung nach einem der vorhergehenden Ansprüche,
**dadurch gekennzeichnet, dass**
die Luftströmungskanäle (14) durch parallel zueinander angeordnete Blechlagen (22) definiert sind, die jeweils parallel zur Strömungsrichtung des Luftstroms ausgerichtet sind.

9. Klimatisierungseinrichtung nach Anspruch 10,
**dadurch gekennzeichnet, dass**
die Blechlagen voneinander mindestens um 1 mm, höchstens jedoch um 5 mm beabstandet sind.

10. Klimatisierungseinrichtung nach einem der vorhergehenden Ansprüche,
**dadurch gekennzeichnet, dass**
die Temperierkanäle (17) durch eine Mehrzahl von entlang der Strömungsrichtung des Luftstroms mäanderförmig verlaufender Rohre (23) definiert sind, wobei die Mehrzahl der senkrecht zur Strömungsrichtung des Luftstroms ausgerichteten Rohrabschnitte (24) mindestens 4, vorzugsweise mindestens 8, weiter vorzugsweise mindestens 18 beträgt.

11. Klimatisierungseinrichtung nach einem der vorhergehenden Ansprüche,
**dadurch gekennzeichnet, dass**
die Klimatisierungseinrichtung weiterhin eine dem Düsenstock (11) vorgelagerte Vorlufterwärmungseinrichtung (25), insbesondere eine Umluftbeimischeinrichtung (26), eine Wärmerückgewinnungseinrichtung (27) oder ein anderweitig aufheizbares Heizregister zur bedarfsweisen Vorerwärmung des Luftstroms umfasst.

12. Klimatisierungseinrichtung nach einem der vorhergehenden Ansprüche,
**dadurch gekennzeichnet, dass**
Düsenstock (11) und Wärmetauscher (13) ein vormontierbares Modul (29) ausbilden, das in einen Luftkanal geeigneten Querschnitts einsetzbar ist.

13. Klimatisierungseinrichtung nach einem der vorhergehenden Ansprüche,
**dadurch gekennzeichnet, dass**
abstromseitig des Wärmetauschers (13) eine Nachwärmeinrichtung (33) angeordnet ist zur bedarfsweisen Nacherwärmung des Luftstroms, insbesondere im Entfeuchtungsbetrieb.

14. Klimatisierungseinrichtung nach einem der vorhergehenden Ansprüche,
**dadurch gekennzeichnet, dass**
die Nachwärmeinrichtung (33) zur Montage außerhalb des Kanals, insbesondere im Teilstromprinzip, also parallel zum im Kanal geführten Hauptstrom, ausgebildet ist.

15. Klimatisierungseinrichtung nach einem der vorhergehenden Ansprüche,
**dadurch gekennzeichnet, dass**
der Wärmetauscher (13) in Strömungsrichtung des Luftstroms eine Ausdehnung zwischen 200 mm und 800 mm, insbesondere zwischen 300 mm und 600 mm.

16. Klimatisierungseinrichtung nach einem der vorhergehenden Ansprüche,
**dadurch gekennzeichnet, dass**
die Klimatisierungseinrichtung eine Bodenwanne (30) aufweist, in welcher im Kühlbetrieb im Wärmetauscher (13) kondensiertes und abgeschiedenes Wasser aufgefangen und/oder aus welcher dieses Wasser abgeleitet werden kann.

17. Verfahren zum Konditionieren eines in einem Kanal geführten Luftstroms zur Klimatisierung eines Raums,
wobei der Luftstrom über mehrere über den Querschnitt des Kanals verteilt angeordnet mit Druckwasser beaufschlagter Düsen besprüht wird und der Luftstrom in einem Wärmetauscher (13) über ein Wärmefluid aufgeheizt wird,
**dadurch gekennzeichnet, dass**
die Aufheizung des Luftstroms unter gleichzeitiger Verdunstung von im Luftstrom mitgerissener Befeuchtungspartikel in Strömungsrichtung nach der Besprühung vorgenommen wird,
wobei zur Nachverdunstung von im Luftstrom mitgerissener Befeuchtungspartikel (Befeuchtungsbetrieb) und/oder zur Aufheizung des Luftstroms (Heizbetrieb) die Beschickung des Wärmetauschers (13) mit Wärmefluid in Strömungsrichtung des Luftstroms vorgenommen wird und
wobei zur Abkühlung des Luftstroms (Kühlbetrieb) und/oder zur Entfeuchtung des Luftstroms (Entfeuchtungsbetrieb) die Beschickung des Wärmetauschers (13) mit einem Kältefluid entgegen der Strömungsrichtung des Luftstroms vorgenommen wird.

18. Verfahren nach Anspruch 17,
**dadurch gekennzeichnet, dass**
der Wärmetauscher (13) bedarfsweise auch zur Aufheizung des Luftstroms (Heizbetrieb), zur Entfeuchtung des Luftstroms (Entfeuchtungsbetrieb) oder zur Abkühlung des Luftstroms (Kühlbetrieb) einsetzbar ist.

19. Verfahren nach einem der Ansprüche 17 oder 18,
**dadurch gekennzeichnet, dass**
die Aufheizung in einem Wärmetauscher (13) vorgenommen wird, der gleichzeitig als Tropfenabscheider (18) wirkt.

20. Verfahren nach einem der Ansprüche 17 bis 19,
**dadurch gekennzeichnet, dass**
dem Wärmefluid bzw. dem Kältefluid ein einstellbarer Anteil an Umlauffluid beigemischt wird, zur Erzielung bzw. Aufrechterhaltung einer jeweils gewünschten Vorlauftemperatur.

21. Verfahren nach einem der Ansprüche 17 bis 20,
**dadurch gekennzeichnet, dass**
die Fließgeschwindigkeit des Wärme- und/oder Kältefluids durch die Temperierkanäle (17) einstellbar ist, vorzugsweise in einem Fließgeschwindigkeitsbereich von 0,5 m/s bis 10m/s, insbesondere von 0,5 m/s bis 8 m/s und vorzugsweise von 0,5 m/s bis 5 m/s einstellbar ist.

22. Verfahren nach einem der Ansprüche 17 bis 21,
**dadurch gekennzeichnet, dass**
im Entfeuchtungsbetrieb der entfeuchtete Luftstrom im Vollstrom oder im Teilstrom nacherwärmt wird.

23. Verfahren nach einem der Ansprüche 17 bis 22,
**dadurch gekennzeichnet, dass**
die Eingangstemperatur des Luftstroms vor dem Wärmetauscher (13) auf einem Mindesttemperaturniveau von z. B. 5° bis 8° gehalten wird.

24. Verfahren nach einem der Ansprüche 17 bis 23,
**dadurch gekennzeichnet, dass**
die Mindesttemperatur von z. B. 5° bis 8° im Winter durch eine oder eine Kombination der folgenden Maßnahmen erzielt wird:
- Nutzung der Abwärme von Ventilatoren
- Wärmerückgewinnung aus der das Gebäude verlassenden Abluft oder aus anderweitig anfallender Abwärme
- Beimischung von Umluft
- Aufheizung durch ein Heizregister.

25. Verfahren nach einem der Ansprüche 17 bis 24,
**dadurch gekennzeichnet, dass**
in einem Entkeimungsschritt bei reduzierter, abgeschalteter oder umgepolter Luftströmung der Wärmetauscher (13) auf eine Entkeimungstemperatur zur Abtrocknung des Wärmetauschers (13), vorzugsweise auch eines unter dem Wärmetauscher (13) angeordneten Bodens (34) und/oder einer Ablaufrinne (35) erhitzt wird.

## Claims

1. Air conditioning device for conditioning an air flow guided within a duct for air conditioning a space, comprising
- a nozzle bank (11) including a plurality of nozzles (12) arranged to be distributed across the duct's cross-section and applied with pressurized water for outputting water in particular in the form of spray, as well as
- a heat exchanger (13) configured, on the one hand, to be flown through by the air flow and exhibiting a multitude of air flow ducts (14), and, on the other hand, comprising connections (15, 16) for passing a heat and/or cold fluid through one or more tempering channels (17),
wherein the heat exchanger (13) is arranged downstream the nozzle bank (11) in the flow direction of the air flow,
**characterized in that**
the feeding with a heat fluid for post-evaporating humidifying particles entrained in the air flow and/or for heating the air flow is performed such that the heat fluid flows through the heat exchanger (13) in the flow direction of the air flow, and
the feeding with a cold fluid for cooling the air flow and/or for dehumidifying the air flow is performed such that the cold fluid flows through the heat exchanger (13) opposite to the flow direction of the air flow.

2. Air conditioning device according to claim 1,
**characterized in that**
the heat exchanger (13) has a droplet separator (18) integrated or is configured as a droplet separator, or acts as a droplet separator (18).

3. Air conditioning device according to claim 1 or 2,
**characterized in that**
the heat exchanger (13) is configured to fulfill at least two of the following functions, preferably at least three of the following functions, further preferably at least four of the following functions, particularly preferably all of the following functions:
- post-evaporating humidifying particles entrained in the air flow (humidifying operation)
- heating the air flow (heating operation)
- cooling the air flow (cooling operation)
- dehumidifying the air flow (dehumidifying operation)
- drying of humidified or wet surfaces (disinfecting operation).

4. Air conditioning device according to any one of the preceding claims,
**characterized in that**
a mixing valve (19, 20), in particular a three-way valve or a four-way valve is allocated to the heat exchanger (13) at the input side or the output side so as to mix the supply of hot heat fluid or cold fluid with an adjustable proportion of circulating fluid for setting a desired flow temperature.

5. Air conditioning device according to any one of the preceding claims,
**characterized in that**
the air conditioning device furthermore comprises a heat exchanger pump (21) - that is preferably adjustable in its capacity - for pumping the heat fluid or cold fluid through the heat exchanger (13).

6. Air conditioning device according to any one of the preceding claims,
**characterized in that**
the air flow ducts (14) comprise a thermally conducting material of a conductivity coefficient of at least 50 W/(m·K), in particular copper and/or aluminum.

7. Air conditioning device according to any one of the preceding claims,
**characterized in that**
the contact surfaces of the air flow ducts (14) are of sufficient size for exchanging heat with the air flow so as to be capable of ensuring an air flow of a predefined relative humidity to be cooled even with temperatures of the cooling fluid above the dew point.

8. Air conditioning device according to any one of the preceding claims,
**characterized in that**
the air flow ducts (14) are defined by sheet metal layers (22) arranged to be mutually parallel which are each aligned in parallel to the flow direction of the air flow.

9. Air conditioning device according to claim 10,
**characterized in that**
the sheet metal layers are mutually spaced by at least 1 mm, at most, however, by 5 mm.

10. Air conditioning device according to any one of the preceding claims,
**characterized in that**
the tempering channels (17) are defined by a plurality of ducts (23) extending in a meandering way along the flow direction of the air flow, wherein the plural number of pipe segments (24) aligned perpendicular to the flow direction of the air flow is at least 4, preferably at least 8, further preferably at least 18.

11. Air conditioning device according to any one of the preceding claims,
**characterized in that**
the air conditioning device, upstream the nozzle bank, comprises a preliminary air heating device (25), in particular a recirculated air adding device (26), a heat recovery device (27) or an otherwise heatable heating register for pre-heating the air flow as required.

12. Air conditioning device according to any one of the preceding claims,
**characterized in that**
the nozzle bank (11) and the heat exchanger (13) constitute a module (29) that can be pre-assembled and inserted in an air duct of an appropriate cross-section.

13. Air conditioning device according to any one of the preceding claims,
**characterized in that**
downstream of the heat exchanger (13), a post-heating device (33) is arranged for post-heating the air flow, if required, in particular during the dehumidifying operation.

14. Air conditioning device according to any one of the preceding claims,
**characterized in that**
the post-heating device (33) is configured to be assembled outside the duct, in particular in the partial flow principle, thus in parallel to the main flow guided within the duct.

15. Air conditioning device according to any one of the preceding claims,
**characterized in that**
the heat exchanger (13) has an extension of between 200 mm and 800 mm, in particular between 300 mm and 600 mm in the flow direction of the air flow.

16. Air conditioning device according to any one of the preceding claims,
**characterized in that**
the air conditioning device comprises a base tray (30) in which water condensed and separated in the heat exchanger (13) during the cooling operation can be collected and/or from which said water can be discharged.

17. Method for conditioning an air flow guided within a duct for air conditioning a space,
wherein the air flow is sprayed by a plurality of nozzles arranged to be distributed across the duct's cross-section and applied with pressurized water, and the air flow is heated in a heat exchanger (13) by a heat fluid,
**characterized in that**
the heating of the air flow is performed while simultaneously evaporating humidifying particles entrained in the air flow in the flow direction after spraying,
wherein the feeding of the heat exchanger (13) with a heat fluid for post-evaporating humidifying particles entrained in the air flow (humidifying operation) and/or for heating the air flow (heating operation) is performed in the flow direction of the air flow, and
wherein the feeding of the heat exchanger (13) with a cold fluid for cooling the air flow (cooling operation) and/or for dehumidifying the air flow (dehumidifying operation) is performed opposite to the flow direction of the air flow.

18. Method according to claim 17,
**characterized in that**
the heat exchanger (13) may be employed also for heating the air flow (heating operation), for dehumidifying the air flow (dehumidifying operation) or for cooling the air flow (cooling operation) as required.

19. Method according to claim 17 or 18,
**characterized in that**
the heating is performed in a heat exchanger (13) which simultaneously acts as a droplet separator (18).

20. Method according to any one of claims 17 to 19,
**characterized in that**
an adjustable proportion of circulating fluid is admixed to the heat fluid or cold fluid for obtaining or maintaining a respective desired flow temperature.

21. Method according to any one of claims 17 to 20,
**characterized in that**
the flow velocity of the heat fluid and/or cold fluid can be set by the tempering channels (17) preferably to a flow velocity range of 0.5 m/s to 10 m/s, in particular of 0.5 m/s to 8 m/s, and preferably of 0.5 m/s to 5 m/s.

22. Method according to any one of claims 17 to 21,
**characterized in that**
the air stream dehumidified in the dehumidifying operation is post-heated in a full flow or a partial flow.

23. Method according to any one of claims 17 to 22,
**characterized in that**
the input temperature of the air flow is kept at a minimum temperature level of e.g. 5° to 8° upstream the heat exchanger (13).

24. Method according to any one of claims 17 to 23,
**characterized in that**
the minimum temperature of e.g. 5° to 8° is achieved in winter by one or a combination of the following measures:
- use of the waste heat of fans
- heat recovery from exhaust air exiting the building or from otherwise arising waste heat
- admixing of recirculating air
- heating by a heating register.

25. Method according to any one of claims 17 to 24,
**characterized in that**
in a disinfecting step at reduced, stopped or reversed air flow, the heat exchanger (13) is heated to a disinfecting temperature for drying the heat exchanger (13) as well as preferably a base (34) that is arranged below the heat exchanger (13), and/or a drain gutter (35).

## Revendications

1. Dispositif de climatisation destiné à conditionner un flux d'air guidé dans un canal pour la climatisation d'un local, comprenant
- un porte-buses (11) doté d'une pluralité de buses (12) disposées de manière répartie sur la section transversale du canal et soumises à de l'eau sous pression afin de délivrer de l'eau, en particulier sous forme d'un brouillard pulvérisé ainsi que
- un échangeur de chaleur (13) qui, d'une part, est constitué de manière à pouvoir être traversé par le flux d'air et présente une multitude de canaux d'écoulement d'air (14) et, d'autre part, présente des raccords (15, 16) pour le transfert d'un fluide calorifique et/ou frigorifique par un ou plusieurs canaux de thermorégulation (17),
sachant que l'échangeur de chaleur (13) est disposé en aval du porte-buses (11) dans le sens d'écoulement du flux d'air, **caractérisé en ce que**, pour l'évaporation ultérieure de particules d'humidification entraînées dans le flux d'air et/ou pour le chauffage du flux d'air, l'alimentation en un fluide calorifique est réalisée de telle sorte que le fluide calorifique traverse l'échangeur de chaleur (13) dans le sens d'écoulement du flux d'air et
sachant que pour le refroidissement du flux d'air et/ou pour la déshumidification du flux d'air, l'alimentation en un fluide frigorifique est réalisée de telle sorte que le fluide frigorifique traverse l'échangeur de chaleur (13) dans le sens opposé au sens d'écoulement du flux d'air.

2. Dispositif de climatisation selon la revendication 1,
**caractérisé en ce que**
l'échangeur de chaleur (13) présente de manière intégrée un séparateur de gouttelettes (18) ou bien est constitué comme séparateur de gouttelettes ou agit comme séparateur de gouttelettes (18).

3. Dispositif de climatisation selon la revendication 1 ou 2,
**caractérisé en ce que**
l'échangeur de chaleur (13) est constitué pour accomplir au moins deux, de préférence au moins trois, de façon encore plus préférentielle au moins quatre des fonctions suivantes, et de façon particulièrement préférée toutes les fonctions suivantes :
- évaporation ultérieure de particules d'humidification entraînées dans le flux d'air (mode d'humidification)
- chauffage du flux d'air (mode de chauffage)
- refroidissement du flux d'air (mode de refroidissement)
- déshumidification du flux d'air (mode de déshumidification)
- séchage de surfaces humidifiées ou mouillées (mode de désinfection).

4. Dispositif de climatisation selon l'une des revendications précédentes,
**caractérisé en ce que**
une vanne mélangeuse (19, 20), en particulier une vanne à trois voies ou une vanne à quatre voies, est assignée à l'échangeur de chaleur (13) côté entrée ou côté sortie pour mélanger l'amenée de fluide calorifique chaud ou de fluide frigorifique avec une proportion réglable de fluide de circulation pour le réglage d'une température de départ souhaitée.

5. Dispositif de climatisation selon l'une des revendications précédentes,
**caractérisé en ce que**
le dispositif de climatisation comprend en outre une pompe d'échangeur de chaleur (21) - de préférence réglable eu égard à sa capacité de refoulement - pour pomper le fluide calorifique ou frigorifique à travers l'échangeur de chaleur (13).

6. Dispositif de climatisation selon l'une des revendications précédentes,
**caractérisé en ce que**
les canaux d'écoulement d'air (14) comprennent du matériau thermiquement conducteur ayant un coefficient de conductibilité d'au moins 50 W(m·K), en particulier du cuivre et/ou de l'aluminium.

7. Dispositif de climatisation selon l'une des revendications précédentes,
**caractérisé en ce que**
les surfaces de contact des canaux d'écoulement d'air (14) pour l'échange de chaleur avec le flux d'air sont suffisamment grandes pour pouvoir garantir un refroidissement d'un flux d'air d'une humidité relative prédéterminée même à des températures du fluide frigorifique supérieures au point de rosée.

8. Dispositif de climatisation selon l'une des revendications précédentes,
**caractérisé en ce que**
les canaux d'écoulement d'air (14) sont définis par des couches de tôle (22) disposées parallèlement les unes aux autres, et respectivement orientées parallèlement au sens d'écoulement du flux d'air.

9. Dispositif de climatisation selon la revendication 10,
**caractérisé en ce que**
les couches de tôle sont espacées les unes des autres d'au moins 1 mm, néanmoins tout au plus de 5 mm.

10. Dispositif de climatisation selon l'une des revendications précédentes,
**caractérisé en ce que**
les canaux de thermorégulation (17) sont définis par une pluralité de tubes (23) évoluant en forme de méandres le long du sens d'écoulement du flux d'air, sachant que le nombre des portions de tube (24) orientées perpendiculairement au sens d'écoulement du flux d'air est d'au moins 4, de préférence d'au moins 8, de façon encore plus préférentielle d'au moins 18.

11. Dispositif de climatisation selon l'une des revendications précédentes,
**caractérisé en ce que**
le dispositif de climatisation comprend en outre un dispositif de préchauffage d'air (25) situé en amont du porte-buses (11), en particulier un dispositif d'adjonction d'air de circulation (26), un dispositif de récupération de chaleur (27) ou un radiateur pouvant être chauffé d'une autre façon pour le préchauffage du flux d'air selon les besoins.

12. Dispositif de climatisation selon l'une des revendications précédentes,
**caractérisé en ce que**
le porte-buses (11) et l'échangeur de chaleur (13) constituent un module (29) prémontable qui peut être inséré dans un canal d'air de section transversale appropriée.

13. Dispositif de climatisation selon l'une des revendications précédentes,
**caractérisé en ce que**
un dispositif de réchauffage (33) est disposé en aval de l'échangeur de chaleur (13) pour le réchauffage du flux d'air selon les besoins, en particulier en mode de déshumidification.

14. Dispositif de climatisation selon l'une des revendications précédentes,
**caractérisé en ce que**
le dispositif de réchauffage (33) est constitué pour le montage en dehors du canal, en particulier dans le principe du flux partiel, soit parallèlement au flux principal guidé dans le canal.

15. Dispositif de climatisation selon l'une des revendications précédentes,
**caractérisé en ce que**
l'échangeur de chaleur (13) présente une extension comprise entre 200 mm et 800 mm, en particulier entre 300 mm et 600 mm dans le sens d'écoulement du flux d'air.

16. Dispositif de climatisation selon l'une des revendications précédentes,
**caractérisé en ce que**
le dispositif de climatisation présente une cuvette de fond (30) dans laquelle, en mode de refroidissement, de l'eau condensée et séparée dans l'échangeur de chaleur (13) est récoltée et/ou à partir de laquelle cette eau peut être évacuée.

17. Procédé de conditionnement d'un flux d'air guidé dans un canal pour la climatisation d'un local,
sachant que le flux d'air est pulvérisé via plusieurs buses disposées de manière répartie sur la section transversale du canal et soumises à de l'eau sous pression et le flux d'air est chauffé dans un l'échangeur de chaleur (13) via un fluide calorifique,
**caractérisé en ce que**
le chauffage du flux d'air s'effectue sous évaporation simultanée de particules d'humidification entraînées dans le flux d'air dans le sens d'écoulement après la pulvérisation,
sachant que pour l'évaporation ultérieure de particules d'humidification entraînées dans le flux d'air (mode d'humidification) et/ou pour le chauffage du flux d'air (mode de chauffage), l'alimentation de l'échangeur de chaleur (13) en fluide calorifique s'effectue dans le sens d'écoulement du flux d'air et
sachant que pour le refroidissement du flux d'air (mode de refroidissement) et/ou pour la déshumidification du flux d'air (mode de déshumidification), l'alimentation de l'échangeur de chaleur (13) en un fluide frigorifique s'effectue dans le sens opposé au sens d'écoulement du flux d'air.

18. Procédé selon la revendication 17,
**caractérisé en ce que**
l'échangeur de chaleur (13) est également utilisable selon les besoins pour chauffer le flux d'air (mode de chauffage), pour déshumidifier le flux d'air (mode de déshumidification) ou pour refroidir le flux d'air (mode de refroidissement).

19. Procédé selon l'une des revendications 17 ou 18,
**caractérisé en ce que**
le chauffage s'effectue dans un l'échangeur de chaleur (13) qui agit simultanément comme séparateur de gouttelettes (18).

20. Procédé selon l'une des revendications 17 à 19,
**caractérisé en ce que**
une proportion réglable de fluide de circulation est adjointe au fluide calorifique ou au fluide frigorifique afin d'atteindre ou de maintenir une température de départ souhaitée respectivement.

21. Procédé selon l'une des revendications 17 à 20,
**caractérisé en ce que**
la vitesse d'écoulement du fluide calorifique et/ou frigorifique à travers les canaux de thermorégulation (17) est réglable, de préférence dans une plage de vitesse d'écoulement de 0,5 m/s à 10 m/s, en particulier de 0,5 m/s à 8 m/s et de préférence de 0,5 m/s à 5 m/s.

22. Procédé selon l'une des revendications 17 à 21,
**caractérisé en ce que**
en mode de déshumidification, le flux d'air déshumidifié est réchauffé en flux total ou en flux partiel.

23. Procédé selon l'une des revendications 17 à 22,
**caractérisé en ce que**
la température d'entrée du flux d'air avant l'échangeur de chaleur (13) est maintenue à un niveau de température minimale de p. ex. 5° à 8°.

24. Procédé selon l'une des revendications 17 à 23,
**caractérisé en ce que**
la température minimale de p. ex. 5° à 8° est obtenue en hiver par une ou une combinaison des mesures suivantes :
- utilisation de la chaleur dissipée de ventilateurs
- récupération de chaleur à partir de l'air d'échappement quittant le bâtiment ou de chaleur dissipée occasionnée d'une autre façon
- adjonction d'air de circulation
- chauffage par un radiateur.

25. Procédé selon l'une des revendications 17 à 24,
**caractérisé en ce que**
à une étape de désinfection à écoulement d'air réduit, coupé ou à polarité inversée, l'échangeur de chaleur (13) est chauffé à une température de désinfection en vue du séchage de l'échangeur de chaleur (13), de préférence également d'un fond (34) disposé sous l'échangeur de chaleur (13) et/ou d'une goulotte d'évacuation (35).
